# EUROPEAN PATENT SPECIFICATION

(11) **EP 0 558 983 B1**
(45) Date of publication and mention of the grant of the patent: **13.05.1998**
(21) Application number: 93102316.2
(22) Date of filing: 15.02.1993
(51) Int. Cl.: G11B 5/60

(54) **Tripad air bearing magnetic head slider**
Dreiflachluftkissengelagerter Gleitkörper für Magnetkopf
Patin flottant sur trois coussins d'air pour tête magnétique

(30) Priority: 06.03.1992 US 846719; 10.08.1992 US 928614; 19.11.1992 US 978991
(43) Date of publication of application: 08.09.1993
(73) Proprietor: READ-RITE CORPORATION, Milpitas California 95035 (US)
(72) Inventor: Leung, Chak M., Palo Alto, California 94301 (US); Gooden, Carroll S., San Jose, California 95117 (US); Williams, Edgar M., Palo Alto, California 94301 (US)
(74) Representative: Körber, Wolfhart, Dr.rer.nat.

(56) References cited:
- EP-A- 361 658
- EP-A- 387 444
- EP-A- 466 502
- US-A- 4 700 248

## Description

### Field of the Invention

This invention relates to a magnetic head slider and in particular to a method and means of making a head slider useful in a hard disk drive.

### Description of the Prior Art

Magnetic head air bearing sliders typically are formed with outer longitudinal rails that extend from the leading edge to the trailing edge of the slider. The leading or upstream edge is defined as the edge of the slider which the rotating data track of a disk passes prior to traversing the length of the slider towards the trailing or downstream edge. During operation of a disk drive, the air bearing surfaces of the sliders experience a fluid flow that provides a lift force to fly the sliders relative to the rotating disks.

Major objectives in the design of air bearing head sliders are to fly the sliders and their transducers as close as possible to the surface of the disk and to maintain a constant close spacing and substantial uniform flying height. The close spacing, when used with very narrow transducing gaps such as provided with thin film heads and also with very thin magnetic films on the disk surface, allows short wavelength signals to be recorded, thereby affording high density recording with improved storage capacity. By having constant spacing between the head and the disk, the amplitude of the signal being recorded or read out is not varied significantly, thus improving signal resolution and making data processing more reliable.

Presently, head slider assemblies are produced by depositing a multiplicity of thin film transducers on a ceramic wafer, then cutting the wafer into row bars, and processing the bars to form air bearing sliders having longitudinal rails with tapers at the leading edge. In the case of TPC (transverse pressure contour) sliders, the rails and adjacent regions are made by etching, such as reactive ion etching, ion milling, electrostatic discharge machining or ultrasonic machining. These processes are time consuming and costly. The etched depth of the recess regions are critical to attaining uniform flying height.

### Summary of the Invention

An object of this invention is to provide a magnetic head slider having a substantially reduced size and significantly lower mass and weight than prior known sliders.

Another object of this invention is to provide an air bearing head slider that realizes a substantially uniform flying height.

Another object is to provide an air bearing slider that has a low takeoff velocity and achieves a relatively light landing on a disk surface.

Another object is to provide an air bearing slider that has a relatively low coefficient of static friction.

Another object is to provide a slider design means that allows producing a mulitplicity of pad/taper configurations to optimize the flying characteristics of the slider.

Another object is to provide an improved process for producing an air bearing slider with a significant savings in time and cost.

A further object is to provide an air bearing slider that has long durability for start-shop contact operation.

According to this invention, an air bearing slider is fabricated with three pads and adjacent recesses. Two outer pads are located at the sides of the slider, and tapers are provided between the leading edge and the two outer pads. A third central pad extends from the trailing edge substantially along the central longitudinal axis of the slider. The tapers and the two outer pads define a central recess extending from the leading edge and towards the leading part of trailing third pad. The pole tips that define the transducing gap of the thin film transducer are deposited at the trailing edge of the slider and are coincident with the air bearing surface at the third pad. Proper edge blending on the pads eliminate sharp edges and corners.

In one implementation of this invention, the recesses are cut out by mechanical sawing, preferably by ganged diamond saw wheels. During production, a plurality of row bars of slider elements are positioned and fixed in a staggered arrangement. The sawing apparatus cuts across the row bars at predetermined angles. The rise angle of the tapers extending from the leading edge to the outer pads are formed by lapping with a lapping plate. In this way, each slider being fabricated is configured with the same air bearing surface design. Alternatively, the pads are defined by masking and subsequent ion milling. reactive ion etching. electrostatic discharge machining or ultrasonic machining.

In a preferred embodiment, two angular saw cuts from the trailing end to the leading end of the slider and one horizontal or lateral saw cut serve to define the geometry of the three pads, the tapers and the recessed regions for all the row bars being processed simultaneously. Various modifications of the angular portions of the three pads can be made to change lift force, or to desensitize for skew which is experienced in disk drives using rotary head atuators.

In particular embodiments of the invention, the two outer pads of the slider have angled inner sides or angled portions of the inner sides which are configured so that the widest portion of the two outer pads is adjacent to the taper sections. In such embodiments, the third rear pad has two angled sides, each side being parallel respectively to the angled sides or angled side portions of the two outer pads.

In preferred embodiments of the invention, the two outer pads at opposing sides of the slider are formed with the widest portion adjacent to the taper section and the narrowest portion towards the trailing end of the slider. The third rear pad has two angled sides, defining a trapezoid or a triangle. In one implementation, the pads and tapered sections are substantially rectangular and the front pads extend only part way from the leading edge to the trailing edge of the slider.

### Brief Description of the Drawings

The invention will be described in greater detail with reference to the drawings in which:
Figure 1 is a cross-sectional plan view of a tripad microslider, made in accordance with this invention;
Figures 2A, 2B and 3 depict preferred embodiments of the novel slider of this invention, used as microsliders and nanosliders;
Figures 4 - 12 are cross-sectional plan views showing alternative designs of air bearing sliders, made in accordance with this invention, wherein Figure 7 represents a microslider;
Figure 13 is a representational view showing the shaping of the angular recesses for defining the tripad air bearing surfaces of the sliders;
Figure 14 is a plan view of an alternative embodiment of a tripad slider useful for contact recording;
Figure 15 is a representational plan view of an alternative configuration of the air bearing surface of the slider shown in Figure 14; and
Figure 16 is an isometric view of the slider of Figure 15.

### Detailed Description of the Invention

For the purpose of explanation, a full size standard slider is defined as having dimensions of about 4 mm (0.160 inch) long, 3.2 mm (0.125 inch) wide and 0.9 mm (0.0345 inch) high. A microslider is defined as having dimensions about 70% of those of a standard slider, for example, about 2.8 mm (0.112 inch) long, 2.2 mm (0.088 inch) wide and 0.6 mm (0.024 inch) high. A nanoslider has dimensions about 50% of the standard slider dimensions, for example, about 2 mm (0.080 inch) long, 1.6 mm (0.063 inch) wide and 0.4 mm (0.017 inch) high.

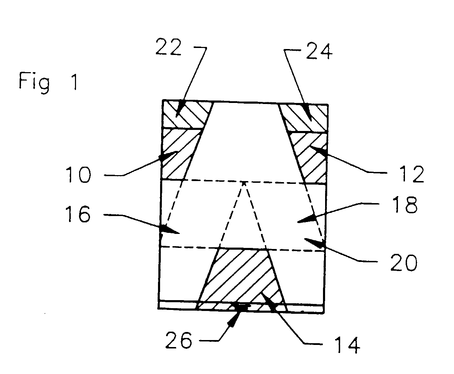

With reference to Fig. 1, an air bearing microslider is formed with three pads 10, 12 and 14 that provide the positive air bearing regions to the air bearing surface of the microslider.

The recess regions of the microslider are formed by cutting angular reliefs or recesses 16 and 18 and a lateral relief or recess 20 across the central portion of the slider. The three cuts made by mechanical sawing apparatus using diamond saw wheels define the geometry of the three pads 10, 12 and 14. Tapers 22 and 24 are provided at the leading or upstream edge of the slider. In a specific embodiment, the cuts for the recesses 16 and 18 are made at an angle of about 10° relative to the longitudinal axis of the slider. During production, all of the three pads of the sliders of a row bar are lapped on the same lapping plate to achieve flatness control. For a slider having a taper length of about 0.3 mm (0.011 inch), the tapers 22 and 24 preferably have a rise angle of about 50 minutes from the leading edge to the pads 10 and 12. The relief cuts for forming and recesses are about 0.05 mm - 0.1 mm (2 - 4 milli-inches) deep. The pole tips 26 of the thin film transducer that is formed at the trailing or downstream edge are shown as centered, but may be located off-center to adjust for skew and to realize a constant flying height. In an actual implementation of the slider illustrated in Fig. 1, the slider successfully completed 100,000 cycles in a contact start-stop test operation, and with a coefficient of static friction significantly lower that the experienced with a typical prior art twin rail taper flat or TPC slider.

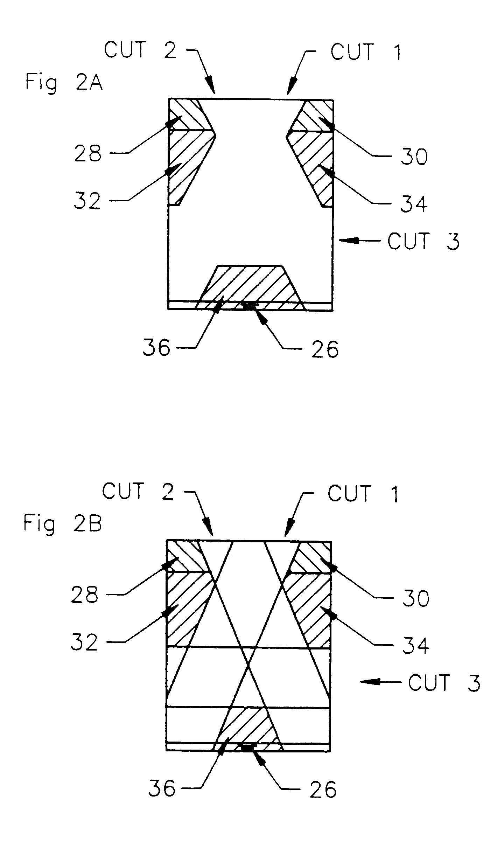

Figs. 2A and 2B show preferred embodiments which are modified versions of the slider shown in Fig. 1. These versions are designated as having the dimensional characteristics in the range of a 70% microslider and a nanoslider. In the designs, the lateral cut 3 is not centered with respect to the horizontal central axis of the slider, but is made with one edge of the cut close to the horizontal center and the other edge of the cut closer to the trailing end of the slider. The inner exposed sides of the tapers 28 and 30 are angled in an opposing direction to the angles of the sides of the tapers 22 and 24 which are illustrated in Fig. 1. The exposed taper sides form an obtuse angle with the angled sides of the front pads 32 and 34. The outer front pads 32 and 34 extend towards the central horizontal axis of the slider and the rear pad 36 is trapezoidal and reduced in size relative to the rear pad 14 of the slider of Fig. 1.

Figs. 2A and 2B illustrate designs of air bearing sliders in which outer pads 32 and 34 have side portions that are parallel to the major longitudinal axis of the slider and adjacent side portions that are angled to provide narrowing of the pads in the direction of the trailing end of the slider. In Fig. 2B, the trapezoidal third pad 36 at the trailing edge is narrowed to modify the lift force applied to the slider during operation with a disk drive.

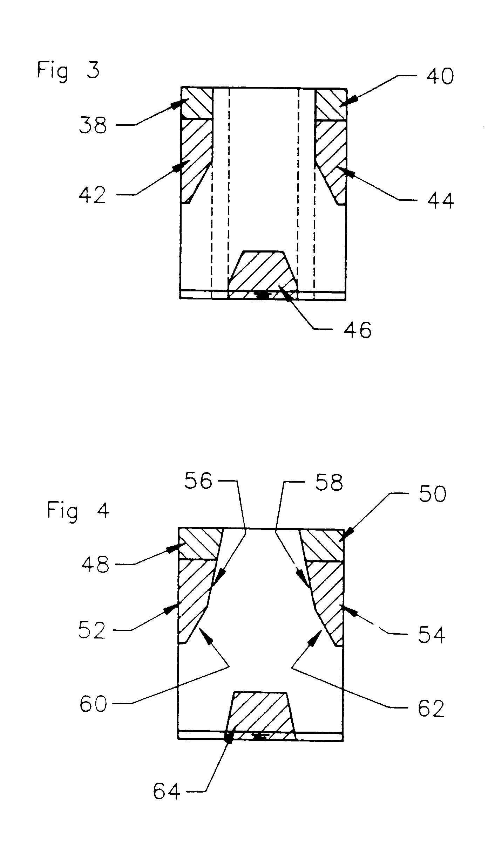

With reference to Fig. 3, to define the linear sides of the tapers 38 and 40 and the linear side portions of the pads 42 and 44, two longitudinal cuts are used in addition to the angular cuts which shape the angled sides of the trapezoidal rear pad 46 and the angled narrowing portions of the pads 42 and 44. In a specific embodiment of the slider of Fig. 3 in which the angular sides of the rear pad 46 are substantially straight, microsliders which are 70% in size of standard sliders, were fabricated to fly in a typical 3.5 inch disk drive using a rotary actuator. The flying height achieved was approximately 0.114 mm + 25 µm (4.5 ± 1 microinch) from the inner to the outer diameter of the disk which was rotating at about 5400 rpm.

In Fig. 3, the tapers 38 and 40 are rectangular, whereas the slider of the Fig. 4 has tapers 48 and 50 that are angled at the inner sides towards the center of the leading end of the slider. The angled sides of the tapers 48 and 50 extend collinearly with the angled sides of portions 56 and 58 of the front outer pads 52 and 54. The front pads 52 and 54 are formed with sharper angled sides of portions 60 and 62 adjacent to and rearward of the angled portions 56 and 58. The sharper angled portions 60 and 62 are narrower than portions 56 and 58 and extend close to the center between the leading and trailing ends of the slider. The sharper angled side portions 60 and 62 require separate cuts during fabrication in addition to the cuts required for the differently angled side portions 56 and 58. The rear pad 64 is trapezoidal in form and its angled sides are determined by the same cuts which form the angled sides of the tapers 48 and 50 and the angled portions 56 and 58.

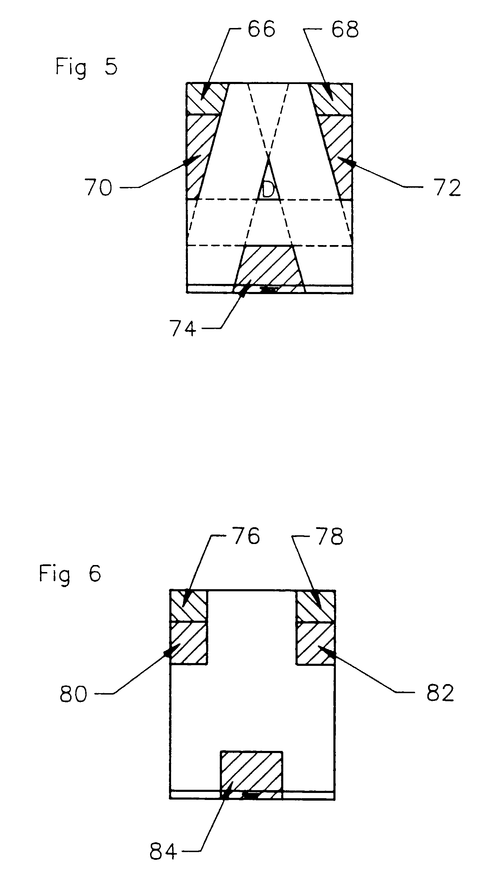

In Fig. 5, the relief cuts used to form the sharper angled portions 60 and 62 of the design of Fig. 4 are eliminated so that the angles at the sides of the tapers 66 and 68, outer front pads 70 and 72 and rear pad 74 are the same. In one implementation, the cuts are made at an angle of about 8° relative to the longitudinal axis of the slider. By using only the two angled cuts from the trailing end to the leading end, an area designated as D in the center of the slider remains to contribute additional lifting force to the slider. If desired, the section D can be processed by laser ablation, for example, to remove some or all of the material of section D so that the lift force can be modified to desired specifications.

Fig. 6 displays a tripad slider having substantially rectangular tapers 76 and 78, outer front pads 80 and 82, and a rear central pad 84. In a specific implementation, the slider was made to fly at about 76 µm (3 microinches) relative to a disk rotating at 5400 rpm in a 3.5 inch disk drive. The tapers 76 and 78 were lapped to a rise angle of about 50 minutes and were about 0.28 mm (0.011 inch) long. The two pads 80 and 82 adjacent to the tapers 76 and 78 were made to be about 0.38 mm (0.015 inch) wide and 0.38 mm (0.015 inch) long. The relief cuts to define the recessed regions were cut to a depth of about 50 µm - 150 µm (2 - 6 milli-inches).

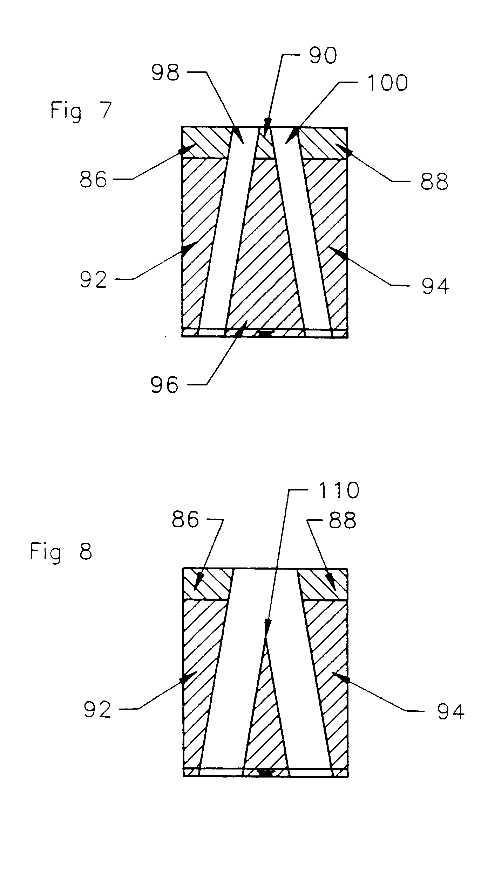

In the embodiment of Fig. 7, only two angular cuts are needed to define three tapers 86, 88 and 90 and three elongated pads 92, 94 and 96 which extend from the trailing end of the slider to the respective three tapers 86, 88 and 90. The angles of the relief slots are cut at about 10° relative to the central axis of the slider. Only two cuts are needed to define the regions between the three pads and the tapered sections. During operation of the air bearing slider of this design, the incoming air flow diverges through the recesses or slots 98 and 100 and exits equidistantly from the transducing gap at the trailing end of the slider.

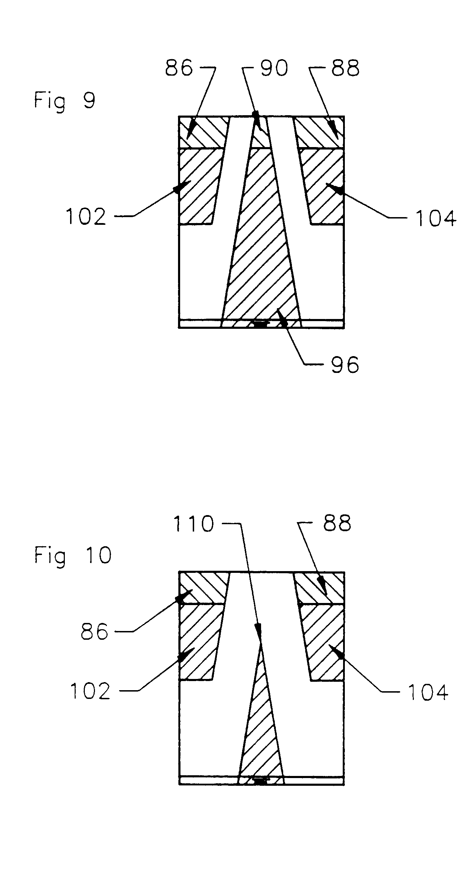

Fig. 8 shows a modified design of the slider of Fig. 7 wherein a central taper is not used. Tapers 86 and 88 and outer front pads 92 and 94 remain virtually the same. However the width of the cuts is increased so that the center taper is eliminated and the center pad 110 is narrowed and reduced in length and area to delineate a narrow triangular shape.

Fig. 9 shows another modified design of the slider of Fig. 7 wherein the outer pads 102 and 104 are cut by saws that move longitudinally to midway of the slider, after the angular cuts have been made to define the central pad 96 and taper 90, as well as the angled sides of pads 102 and 104 and tapers 86 and 88.

Fig. 10 incorporates the design of the outer pads 102 and 104 of Fig. 9 and the triangular center pad 110 of Fig. 8.

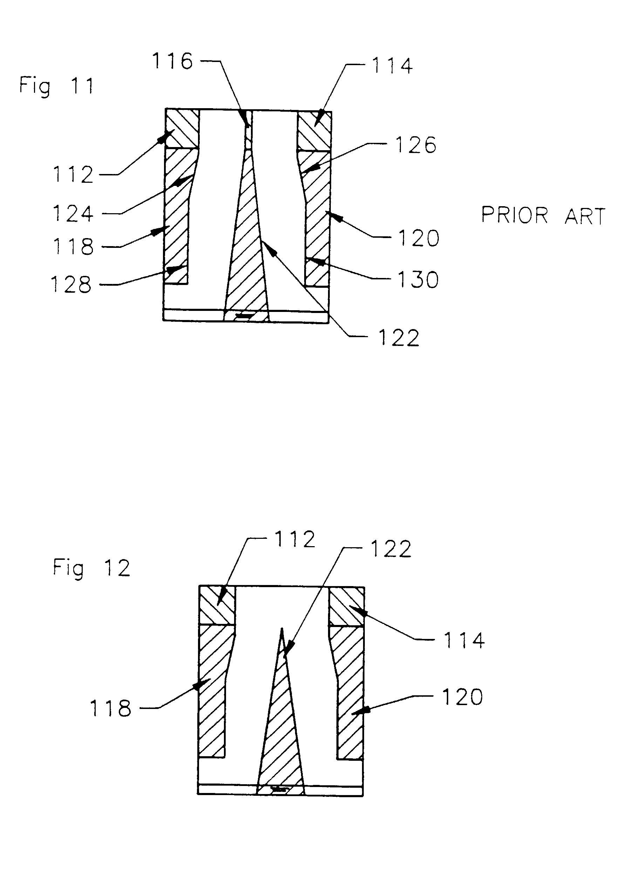

In Fig. 11, the prior art slider includes three taper sections 112, 114 and 116 which are substantially rectangular. The center taper 116 is very narrow and is adjacent to a conical central pad 122 that widens as it extends from the taper 116 to the trailing end of the slider. The outer front pads 118 and 120 have angled side portions 124 and 126 respectively adjacent to the tapers 112 and 114. Rectangular sections 128 and 130 are formed adjacent to and rearward of the pad sections 128 and 130, and extend partially along the sides of the slider beyond midway of the slider length.

Fig. 12 shows a modified version of the design of Fig. 11 wherein there is no central taper. The slider has rectangular tapers 112 and 114 and outer front pads 118 and 120 similar to those of Fig. 12. However the central pad 122 is shaped as a triangle with its apex at a point midway between the ends of the tapers 112 and 114 which are adjacent to the pads 118 and 120.

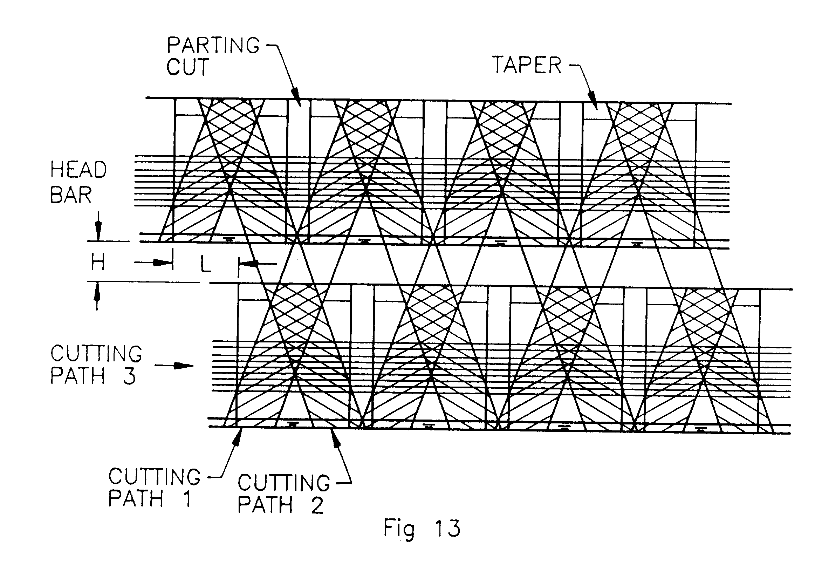

Fig. 13 illustrates the novel technique used to form the reliefs and slotted recesses that define pads which provide the desired air bearing surface of the sliders. To obtain the desired angles of the slots, the row bars on which the equally spaced thin film transducers have been deposited are fixed on a holding tool in a staggered relationship. The horizontal displacement L and the vertical displacement H of the row bars are established so that when a ganged diamond saw apparatus cuts through a plurality of fixed staggered bars at a predetermined angle, the relief slots are produced in substantially the same location of each slider and at the same angle. Cutting paths 1 and 2 provide the opposing angular slotted recesses whereas cutting path 3 is used for the lateral cuts across the air bearing surface of the slider. For those designs in which the outer front pads do not extend to the trailing end of the slider, longitudinal cuts of a specified distance are made substantially orthogonal to the longitudinal axis of the slider. The tapered areas are formed separately by lapping the row bars on a lapping plate, as is well known in the art.

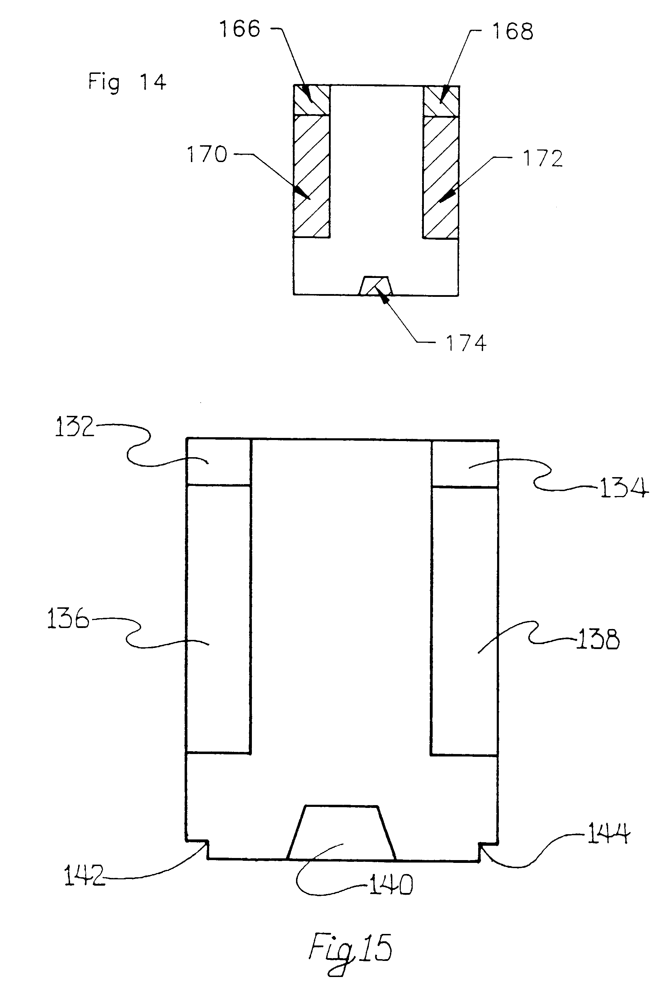

Another embodiment of a tripad slider is depicted in Fig. 14. The tripad nanoslider is designed with leading edge rectangular tapers 166 and 168 which preferably are about 0.2 mm (0.008 inch) long having a 40 minute taper angle. Two rectangular side pads 170 and 172 follow the tapers 166 and 168 and extend to about 1.47 mm (0.058 inch) from the leading edge of the 2.03 mm (0.080 inch) long slider. The width of the rectangular tapers 166 and 168 and side pads 170 and 172 is approximately 0.23 mm (0.009 inch). A third rear pad 174 is centrally located at the trailing end of the slider and is trapezoidal in design. The width at the trailing edge of the rear pad 174 is about 0.33 mm (0.013 inch) and the length of the rear pad is about 0.18 mm (0.007 inch). The pads are edge blended to round out the corners and edges of the pads. The recessed area between the pads is at least 51 µm (0.002 inch) in depth. During assembly of the head slider to a suspension, the slider is bonded to a flexure, which allows the slider to pitch and roll. The bonding point is preferably close to the central longitudinal axis of the slider and less than the extending dimension of 1.47 mm (0.058 inch) from the leading edge of the slider. An offset from the central longitudinal axis is introduced, with a displacement towards the outer diameter (OD) of an associated disk, to minimize roll. When the slider moves from the inner diameter (ID) to the OD of the disk, the flying height tends to increase due to the faster rotary speed of the outer disk tracks. Typically in operation of a disk drive, the pitch of the slider increases causing the flying height of the transducer at the trailing edge to decrease so that the result is a substantially constant flying height across the disk surface. The flying height could be low enough to be in pseudo-contact or contact with the disk. The tripad design of Fig. 14 serves to minimize wear and results in improved head/disk interface integrity for contact start-stop, contact and pseudo-contact recording.

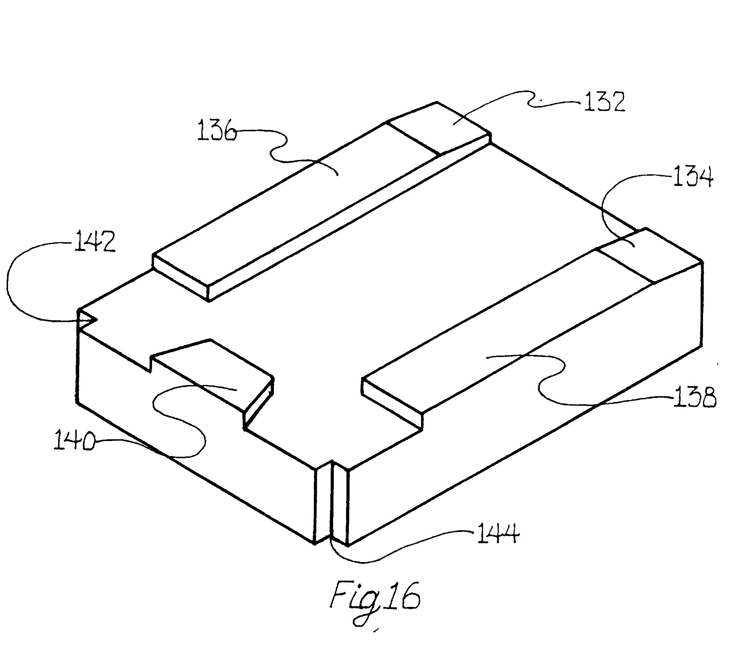

Figs. 15 and 16 illustrate another embodiment of a tripad slider which is formed with tapers 132 and 134 at its leading edge, and side rails or pads 136 and 138 that extend partially towards the trailing edge of the slider. A trapezoidal-type third pad 140 is provided at the trailing edge substantially centrally relative to the longitudinal axis of the slider. In this embodiment, the slider is formed with notched portions 142 and 144 at the corners where the slider trailing edge and sides meet. The notches 142 and 144 serve to reduce the overall mass of the slider and therefore improves liftoff of the slider into flying position. Also the notches minimize the possibility of interference of the slider with the head wiring assembly or with the disk motor hub. In one implementation of this design, the slider had an overall length of about 2.03 mm (0.0800 inch) and overall width of about 1.6 mm (0.0630 inch), with leading edge tapers about 0.203 mm (0.0080 inch) long and 0.254 mm (0.0100 inch) wide. The length of the notches along the sides was about 0.228 mm (0.0090 inch) and the width along the trailing edge was about 0.19 mm (0.0075 inch) wide. Thus the resultant width of the trailing edge was about 1.219 mm (0.0480 inch) and the resultant length along the sides was about 1.803 mm (0.0710 inch). The trapezoidal third rear pad 140 was about 0.228 mm (0.0090 inch) long measured from the trailing edge and its largest width at the trailing edge at its trapezoidal base was about 0.33 mm (0.0130 inch). The lengths of the side pads 136 and 138 were about 1.27 mm (0.0500 inch) measured from the tapers.

There has been described herein a tripad magnetic head air bearing slider wherein two front outer pads are located along the sides of the slider and a rear central pad is located at the trailing end of the slider. Angular cuts by ganged diamond saw wheels are made simultaneously across a plurality of row bars of sliders, which are staggered and fixed in position during the mechanical sawing operation. In this way, the pads and recesses are properly defined on the air bearing surfaces of the sliders.

It should be understood that the invention is not limited to the specific designs disclosed herein. For example, the front pads may have different widths and may be asymmetrically disposed. Also the angle of the sides of the pads can vary to achieve different flying characteristics. The magnetic transducer or magnetoresistive (MR) sensor can be located off center relative to the rear pad of the slider. In addition, when ion milling, reactive ion etching, electrostatic discharge machining or ultrasonic machining is used to define the shape of the pads, the sides of the front pads do not need to be parallel to the sides of the rear pad, which occurs with mechnical saw cutting along the slider. With the disclosed tripad design, sliders having dimensions as small as 25%- 50% of those of the standard slider can be made.

Prior art twin rail taper flat sliders which are used in disk drives requiring low flying height are limited to narrow rail configurations. Therefore, the thin film transducer that is disposed at the trailing end of the rail is limited in width thereby limiting the number of coil turns formed for any coil layer. The tripad slider design disclosed herein makes available relatively wider space at the rear pad to overcome the limitations of the prior art two rail slider.

A tripad air bearing slider useful in a disk drive is designed with two outer pads that extend from two or more tapered sections at the leading edge of the slider towards the trailing edge. The pads are configured and angled so that a desired lift force is obtained that acts in opposition to a force provided by a spring loaded flexure or load beam. The angles that define the shape of the three pads are formed by simple mechanical cutting, using a diamond cutting wheel, for example, or alternatively by ion milling or reactive ion etching.

## Claims

1. A magnetic head air bearing slider having leading and trailing ends and a longitudinal central axis extending between said ends comprising:
first, second and third pads (10, 12, 14 ; 170,172,174), said first and second pads (10, 12) being disposed at opposing sides of said slider, said third pad (14) extending from and having an end at the trailing end of said slider and approximately centered relative to the longitudinal axis;
at least first and second tapered sections (22, 24 ; 166,168) at the leading end of said slider, said sections being adjacent respectively to said first and second pads (10, 12 ; 170;172):
recessed regions (16, 18) formed between said pads (10, 12, 14 ; 170,172,174), and extending from said trailing end to said leading end of said slider, said recessed regions (16, 18) having angular portions relative to said longitudinal axis for defining angled sides of said pads (10, 12, 14 ; 170,172,174), characterized in that
said tapered sections (22, 24 ; 166,168) and said first and second pads (10, 12 ; 170,172) define a central recess extending from said leading end towards the leading part of said third trailing pad (14 ; 174).

2. A slider as in claim 1, wherein said third pad (14) is substantially trapezoidal, the angled sides of said pad (14) being parallel to the angled sides of said first and second pads (10, 12) respectively.

3. A slider as in claim 1 or 2, wherein said recessed regions (16, 18) include a linear recess formed laterally and orthogonally to said longitudinal axis for defining the length of said pads (10, 12, 14) between said leading and trailing ends.

4. A slider as in any of the preceding claims, wherein said tapered sections (22, 24) include angled sides that are collinear with the angled sides of said first and second pads (10, 12).

5. A slider as in any of claims 1 to 3, wherein said tapered sections (22, 24) include angled sides that are substantially parallel to the angled sides of said third pad (14) and form obtuse angles with the angled sides of said first and second pads (10, 12).

6. A slider as in any of the preceding claims, wherein said first and second pads (10, 12) are disposed equidistantly from said leading end in one direction and from said central axis in a direction perpendicular to said one direction.

7. A slider as in any of claims 1 to 5, wherein said first and second pads (10, 12) are disposed asymmetrically on said slider.

8. A slider as in any of the preceding claims, wherein said first and second pads (10, 12) extend from said trailing end to said tapered sections (22, 24).

9. A slider as in any of the preceding claims, wherein said third pad (14) is triangular in shape.

10. A slider as in any of the preceding claims, wherein said third pad (14) is frustoconical in shape.

11. A slider as in any of the preceding claims, wherein said first and second pads (10, 12) extend from said tapered sections (22, 24) approximately to the midpoint of said slider.

12. A slider as in any of the preceding claims, including a magnetic transducer or magnetoresistive sensor disposed at the trailing end of said slider adjacent to said third pad (14).

13. A slider as in claim 12, wherein said transducer or sensor is offset relative to said longitudinal central axis.

14. A slider as in any of the preceding claims, wherein the angled sides of said first and second pads (10, 12) are not parallel to the angled sides of said third pad (14).

15. A slider as in any of the preceding claims, wherein said slider is about 4 mm (0.160 inch) long, 3.2 mm (0.125 inch) wide and 0.9 mm (0.0345 inch) high.

16. A slider as in any of claims 1 to 14, wherein said slider is about 2.8 mm (0.112 inch) long, 2.2 mm (0.088 inch) wide and 0.6 mm (0.024 inch) high.

17. A slider as in claim 16, wherein said slider is mounted within a disc drive having a rotary actuator so that said slider flies at a substantially uniform flying height of approximately 0.114 mm ± 25 µm (4.5 ± 1 microinch) from the inner to the outer diameter of a disk rotating at about 5400 rpm.

18. A slider as in any of claims 1 to 14, wherein said slider is about 2 mm (0.080 inch) long, 1.6 mm (0.063 inch) wide and 0.4 mm (0.017 inch) high.

19. A slider as in claim 1, wherein said first and second pads (170, 172) being disposed toward the leading edge of said slider at the sides of said slider and extending only partially towards the trailing edge, said third pad (174) being disposed at the rear center of said slider at the trailing edge, said first and second pads (170, 172) being substantially rectangular and said third pad (174) being substantially trapezoidal in shape;
tapers (166, 168) being rectangular and disposed at the sides of said slider between said leading edge and said first and second pads (170, 172).

20. A slider as in claim 19, wherein the widths of said rectangular tapers (166, 168) and said first and second pads (170, 172) are about 0.23 mm (0.009 inch).

21. A slider as in claim 19 or 20, wherein said tapers (166, 168) are about 0.2 mm (0.008 inch) long extending from the leading edge of said slider and have a taper angle of about 40 minutes.

22. A slider as in any of claims 19 to 21, wherein the length of said slider is about 2.03 mm (0.080 inch) and said first and second rectangular pads (170, 172)extend from said taper ends to a point from the leading edge of said slider that is more than one-half of said slider length.

23. A slider as in claim 22, wherein said first and second pads (170, 172) extend to a point about 1.47 mm (0.058 inch) from said leading edge.

24. A slider as in any of claims 19 to 23, including a recessed area between said pads (170, 172, 174), said recessed area being at least 0.05 mm (0.002 inch) deep.

25. A slider as in any of claims 19 to 24, wherein said rear center third pad (174) is about 0.178 mm (0.007 inch) long extending to said trailing edge of said slider and is about 0.33 mm (0.013 inch) wide at the trailing edge.

26. A slider assembly an in any of claims 19 to 25, wherein the edges and corners of said pads are edge blended.

27. A slider as in any of claims 19 to 26, including notched portions at the corners of said trailing edge of said slider.

28. A slider as in claim 27, wherein said notched portions are about 0.228 mm (0.0090 inch) long and 0.19 mm (0.0075 inch) wide.

## Patentansprüche

1. Magnetkopf-Luftlager-Gleitkörper, der ein Anfangs-und Endstirnseite und eine Zentrallängsachse hat, die sich zwischen den Stirnseiten erstreckt, mit:
einem ersten, zweiten und dritten Kissen (10, 12, 14; 170, 172, 174), wobei das erste und zweite Kissen (10, 12) auf gegenüberliegenden Seiten des Gleitkörpers angeordnet sind, das dritte Kissen (14) sich von der Endstirnseite ausdehnt und eine Stirnseite an der Endstirnseite des Gleitkörpers hat und ungefähr in bezug auf die Längsachse zentriert ist;
zumindest einem ersten und zweiten verjüngten Abschnitt (22, 24; 166, 168) an der Anfangsstirnseite des Gleitkörpers, wobei die Abschnitte benachbart in bezug auf das erste und zweite Kissen (10, 12; 170, 172) sind;
Ausnehmungsbereichen (16, 18), die zwischen den Kissen (10, 12, 14; 170, 172, 174) gebildet sind und die sich von der Endstirnseite zur Anfangsstirnseite des Gleitkörpers ausdehnen, wobei die Ausnehmungsbereiche (16, 18) Winkelbereiche in bezug auf die Längsachse haben, um abgewinkelte Seiten der Kissen (10, 12, 14; 170, 172, 174) festzulegen,
**dadurch gekennzeichnet, daß**
die verjüngten Abschnitte (22, 24; 166, 168) und das erste und zweite Kissen (10, 12; 170, 172) eine zentrale Ausnehmung festlegen, die sich von der Anfangsstirnseite in Richtung auf das Anfangsteil des dritten Endkissens (14; 174) ausdehnen.

2. Gleitkörper nach Anspruch 1, wobei das dritte Kissen (14) in etwa trapezförmig ist und die abgewinkelten Seiten des Kissens (14) parallel zu den abgewinkelten Seiten des ersten bzw. zweiten Kissens (10, 12) sind.

3. Gleitkörper nach Anspruch 1 oder 2, wobei die Ausnehmungsbereiche (16, 18) eine geradlinige Ausnehmung aufweisen, die seitlich und orthogonal zur Längsachse gebildet ist, um die Länge der Kissen (10, 12, 14) wischen der Anfangs- und Endstirnseite festzulegen.

4. Gleitkörper nach einem der vorhergehenden Ansprüche, wobei die verjüngten Abschnitte (22, 24) abgewinkelte Seiten besitzen, die kollinear mit den abgewinkelten Seiten des ersten und zweiten Kissens (10, 12) sind.

5. Gleitkörper nach einem der Ansprüche 1 bis 3, wobei die verjüngten Abschnitte (22, 24) abgewinkelte Seiten besitzen, die in etwa parallel zu den abgewinkelten Seiten des dritten Kissens (14) sind und stumpfe Winkel mit den abgewinkelten Seiten des ersten und zweiten Kissens (10, 12) bilden.

6. Gleitkörper nach einem der vorhergehenden Ansprüche, wobei das erste und zweite Kissen (10, 12) äquidistant von der Anfangsstirnseite in der einen Richtung und von der Zentralachse in einer Richtung senkrecht zu der einen Richtung angeordnet ist.

7. Gleitkörper nach einem der Ansprüche 1 bis 5, wobei das erste und zweite Kissen (10, 12) asymmetrisch auf dem Gleitkörper angeordnet ist.

8. Gleitkörper nach einem der vorhergehenden Ansprüche, wobei das erste und zweite Kissen (10, 12) sich von der Endstirnseite zu den verjüngten Abschnitten (22, 24) erstreckt.

9. Gleitkörper nach einem der vorhergehenden Ansprüche, wobei das dritte Kissen (14) eine dreiecksförmige Form hat.

10. Gleitkörper nach einem der vorhergehenden Ansprüche, wobei das dritte Kissen (14) eine kegelstumpfförmige Form hat.

11. Gleitkörper nach einem der vorhergehenden Ansprüche, wobei das erste und zweite Kissen (10, 12) sich von den verjüngten Abschnitten (22, 24) ungefähr zum Mittelpunkt des Gleitkörpers ausdehnt.

12. Gleitkörper nach einem der vorhergehenden Ansprüche, der einen Magnetübertrager oder einen magneto-resistiven Sensor umfaßt, der an der Endstirnseite des Gleitkörpers benachbart zum dritten Kissen (14) angeordnet ist.

13. Gleitkörper nach Anspruch 12, wobei der Übertrager oder Sensor gegenüber der Längszentralachse versetzt ist.

14. Gleitkörper nach einem der vorhergehenden Ansprüche, wobei die abgewinkelten Seiten des ersten und zweiten Kissens (10, 12) nicht parallel zu den abgewinkelten Seiten des dritten Kissens (14) sind.

15. Gleitkörper nach einem der vorhergehenden Ansprüche, wobei der Gleitkörper ungefähr 4 mm (0,160 Inch) lang, 3,2 mm (0,125 Inch) breit und 0,9 mm (0,0345 Inch) hoch ist.

16. Gleitkörper nach einem der Ansprüche 1 bis 14, wobei der Gleitkörper ungefähr 2,8 mm (0,112 Inch) lang, 2,2 mm (0,088 Inch) breit und 0,6 min (0,024 Inch) hoch ist.

17. Gleitkörper nach Anspruch 16, wobei der Gleitkörper innerhalb eines Plattenantriebs befestigt ist, der ein Drehbetätigungsorgan hat, so daß der Gleitkörper in einer in etwa gleichförmigen Flughöhe von ungefähr 0,114 mm ± 2,5 µm (4,5 ± 1 Mikroinch) vom Innen- zum Außendurchmesser einer Platte fliegt, die mit ungefähr 5400 min⁻¹ dreht.

18. Gleitkörper nach einem der Ansprüche 1 bis 14, wobei der Gleitkörper ungefähr 2 mm (0,080 Inch) lang, 1,6 mm (0.063 Inch) breit und 0,4 mm (0,017 Inch) hoch ist.

19. Gleitkorper nach Anspruch 1, wobei
das erste und zweite Kissen (170, 172) auf den Anfangsrand des Gleitkörpers zu an den Seiten des Gleitkörpers angeordnet ist und sich nur teilweise auf den Endrand zu ausdehnen, das dritte Kissen (174) an der hinteren Mitte des Gleitkörpers am Endrand angeordnet ist, das erste und zweite Kissen (170, 172) in etwa rechteckig ist und das dritte Kissen (174) eine in etwa trapezförmige Form hat;
Keile (166, 168) rechtwinkelig sind und an den Seiten des Gleitkörpers zwischen dem Anfangsrand und dem ersten und zweiten Kissen (170, 172) angeordnet sind.

20. Gleitkörper nach Anspruch 19, wobei die Breiten der rechtwinkeligen Keile (166, 168) und des ersten und zweiten Kissens (170, 172) ungefähr 0,23 mm (0,009 Inch) sind.

21. Gleitkörper nach Anspruch 19 oder 20, wobei die Keile (166, 168) ungefähr 0,2 mm (0,008 Inch) lang sind, sich vom Anfangsrand des Gleitkörpers ausdehnen und einen Verjüngungswinkel von ungefähr 40 Minuten haben.

22. Gleitkörper nach einem der Ansprüche 19 bis 21, wobei die Länge des Gleitkörpers ungefähr 2,03 mm (0,080 Inch) ist und das erste und zweite rechteckige Kissen (170, 172) sich von den verjüngten Enden zu einem Punkt vom Anfangsrand des Gleitkörpers ausdehnen, der weiter ist als eine Hälfte der Länge des Gleitkörpers.

23. Gleitkörper nach Anspruch 22, wobei das erste und zweite Kissen (170, 172) sich zu einem Punkt ungefähr 1,47 mm (0,058 Inch) vom Anfangsrand ausdehnen.

24. Gleitkörper nach einem der Ansprüche 19 bis 23 mit einer Ausnehmungsfläche zwischen den Kissen (170, 172, 174), wobei die Ausnehmungsfläche zumindest 0,05 mm (0,002 Inch) tief ist.

25. Gleitkörper nach einem der Ansprüche 19 bis 24, wobei das hintere mittige dritte Kissen (174) ungefähr 0,178 mm (0,007 Inch) lang ist, sich zum Endrand des Gleitkörpers ausdehnt und am Endrand ungefähr 0,33 mm (0,013 Inch) breit ist.

26. Gleitkörper nach einem der Ansprüche 19 bis 25, wobei die Ränder und Ecken der Kissen rand-verschmolzen sind.

27. Gleitkörper nach einem der Ansprüche 19 bis 26 mit Aussparungsbereichen an den Ecken des Endrandes des Gleitkörpers.

28. Gleitkörper nach Anspruch 27, wobei die Aussparungsbereiche ungefähr 0,228 mm (0,0090 Inch) lang und 0,19 mm (0,0075 Inch) breit sind.

## Revendications

1. Coulisseau de tête magnétique, à coussinet d'air, ayant des extrémités de tête et de queue et un axe central longitudinal s'étendant entre lesdites extrémités, comportant :
un premier, un deuxième et un troisième patins (10, 12, 14, 170, 172, 174), lesdits premier et deuxième patins (10, 12) étant disposés au niveau de côtés opposés dudit coulisseau, ledit troisième patin (14) s'étendant à partir d'une extrémité située au niveau du bord de queue dudit coulisseau et étant approximativement centrée par rapport à l'axe longitudinal,
au moins un premier et un second tronçons biseautés (22, 24, 166, 168) situés au niveau de l'extrémité de tête dudit coulisseau, lesdits tronçons étant adjacents respectivement auxdits premier et deuxième patins (10, 12, 170, 172) :
des zones creusées (16, 18) formées entre lesdits patins (10, 12, 14, 170, 172, 174), et s'étendant à partir de ladite extrémité de queue vers ladite extrémité de tête dudit coulisseau, lesdites zones creusées (16, 18) ayant des parties inclinées par rapport audit axe longitudinal pour définir des côtés inclinés desdits patins (10, 12, 14 ; 170, 172, 174), caractérisé en ce que
lesdits tronçons inclinés (22, 24, 166, 168) et lesdits premier et deuxième patins (10, 12, 170, 172) définissent une cavité centrale s'étendant à partir de l'extrémité de tête vers la partie de tête dudit troisième patin de queue (14 ; 174).

2. Coulisseau selon la revendication 1, dans lequel ledit troisième patin (14) est pratiquement trapézoïdal, les côtés inclinés dudit patin (14) étant parallèles aux côtés inclinés desdits premier et deuxième patins (10, 12) respectivement.

3. Coulisseau selon la revendication 1 ou 2, dans lequel lesdites zones creusées (16, 18) comportent une cavité linéaire formée latéralement et orthogonalement par rapport audit axe longitudinal pour définir la longueur desdits patins (10, 12, 14) entre lesdites extrémités de tête et de queue.

4. Coulisseau selon l'une quelconque des revendications précédentes, dans lequel lesdits tronçons biseautés (22, 24) comportent des côtés inclinés qui sont colinéaires avec les côtés inclinés desdits premier et deuxième patins (10, 12).

5. Coulisseau selon l'une quelconque des revendications 1 à 3, dans lequel lesdits tronçons biseautés (22, 24) comportent des côtés inclinés qui sont pratiquement parallèles aux côtés inclinés dudit troisième patin (14) et forment des angles obtus avec les côtés inclinés desdits premier et deuxième patins (10, 12).

6. Coulisseau selon l'une quelconque des revendications précédentes, dans lequel lesdits premier et deuxième patins (10, 12) sont disposés de manière équidistante à partir de ladite extrémité de tête dans une direction et à partir dudit axe central dans une direction perpendiculaire à ladite première direction.

7. Coulisseau selon l'une quelconque des revendications 1 à 5, dans lequel lesdits premier et deuxième patins (10, 12) sont disposés de manière asymétrique sur ledit coulisseau.

8. Coulisseau selon l'une quelconque des revendications précédentes, dans lequel lesdits premier et deuxième patins (10, 12) s'étendent à partir de ladite extrémité de queue vers lesdits tronçons biseautés (22, 24).

9. Coulisseau selon l'une quelconque des revendications précédentes, dans lequel ledit troisième patin (14) a une forme triangulaire.

10. Coulisseau selon l'une quelconque des revendications précédentes, dans lequel ledit troisième patin (14) a une forme tronconique.

11. Coulisseau selon l'une quelconque des revendications précédentes, dans lequel lesdits premier et deuxième patins (10, 12) s'étendent à partir desdits tronçons biseautés (22,24), approximativement vers le point médian dudit coulisseau.

12. Coulisseau selon l'une quelconque des revendications précédentes, comportant un transducteur magnétique, ou un détecteur magnétorésistif; disposé au niveau de l'extrémité de queue dudit coulisseau adjacente audit troisième patin (14).

13. Coulisseau selon la revendication 12, dans lequel ledit transducteur, ou le détecteur, est décalé par rapport audit axe central longitudinal.

14. Coulisseau selon l'une quelconque des revendications précédentes, dans lequel les côtés inclinés desdits premier et deuxième patins (10, 12) ne sont pas parallèles aux côtés inclinés dudit troisième patin (14).

15. Coulisseau selon l'une quelconque des revendications précédentes, dans lequel ledit coulisseau a une longueur d'environ 4 mm (0,160 pouce) une largeur de 3,2 mm (0,125 pouce) et une hauteur de 0,9 mm (0,0345 pouce).

16. Coulisseau selon l'une quelconque des revendications 1 à 14, dans lequel ledit coulisseau a une longueur d'environ 2,8 mm (0,112 pouce) une largeur de 2,2 mm (0,088 pouce) et une hauteur de 0,6 mm (0,024 pouce).

17. Coulisseau selon la revendication 16, dans lequel ledit coulisseau est monté dans un lecteur de disque ayant un actionneur rotatif de sorte que ledit coulisseau vole à une hauteur de vol pratiquement uniforme d'approximativement 0,114 mm ± 25 µm (4,5 ± 1 microinch) à partir du diamètre intérieur vers le diamètre extérieur d'un disque tournant à environ 5400 tours par minute.

18. Coulisseau selon l'une quelconque des revendications 1 à 14, dans lequel ledit coulisseau a une longueur d'environ 2 mm (0,080 pouce) une largeur de 1,6 mm (0,063 pouce) et une hauteur de 0,4 mm (0,017 pouce).

19. Coulisseau selon la revendication 1, dans lequel un premier, un deuxième et un troisième patins (170, 172, 174) formés sur ladite surface de coussinet d'air desdits premier et deuxième patins (170, 172) sont disposés vers le bord de tête dudit coulisseau au niveau des côtés dudit coulisseau et s'étendent uniquement partiellement vers le bord de queue, ledit troisième patin (174) étant agencé au niveau du milieu arrière dudit coulisseau au niveau du bord de queue, lesdits premier et deuxième patins (170, 172) étant pratiquement rectangulaires et ledit troisième patin (174) ayant une forme pratiquement trapézoïdale,
des biseaux (166, 168) étant rectangulaires et disposés au niveau des côtés dudit coulisseau entre ledit bord de tête et lesdits premier et deuxième patins (170, 172).

20. Coulisseau selon la revendication 19, dans lequel les largeurs desdits biseaux rectangulaires (166, 168) et desdits premier et deuxième patins (170, 172) sont d'environ 0,23 mm (0,009 pouce).

21. Coulisseau selon la revendication 19 ou 20, dans lequel lesdits biseaux (166, 168) ont une longueur d'environ 0,2 mm (0,008 pouce) s'étendant depuis le bord de tête dudit coulisseau et ont un angle de biseau d'environ 40 minutes.

22. Coulisseau selon l'une quelconque des revendications 19 à 21, dans lequel la longueur dudit coulisseau est d'environ 2,03 mm (0,080 pouce) et lesdits premier et deuxième patins rectangulaires (170, 172) s'étendent à partir desdites extrémités de biseau vers un point à partir du bord de tête dudit coulisscau qui est à plus de la moitié de ladite longueur de coulisseau.

23. Coulisseau selon la revendication 22, dans lequel lesdits premier et deuxième patins (170, 172) s'étendent vers un point situé à environ 1,47 mm (0,058 pouce) à partir dudit bord de tête.

24. Coulisseau selon l'une quelconque des revendications 19 à 23, comportant une zone creusée entre lesdits patins (170, 172, 174), ladite zone creusée ayant une profondeur d'au moins 0,05 mm (0,002 pouce).

25. Coulisseau selon l'une quelconque des revendications 19 à 24, dans lequel ledit troisième patin central arrière (174) a une longueur d'environ 0,178 mm (0,007 pouce) s'étendant vers ledit bord de queue dudit coulisseau et a une largeur d'environ 0,33 mm (0,013 pouce) au niveau du bord de queue.

26. Coulisseau selon l'une quelconque des revendications 19 à 25, dans lequel les bords et les coins desdits patins sont arrondis.

27. Coulisseau selon l'une quelconque des revendications 19 à 26, comportant des parties formant encoche au niveau des coins dudit bord de queue dudit coulisseau.

28. Coulisseau selon la revendication 27, dans lequel lesdites parties formant encoche ont une longueur d'environ 0,228 mm (0,0090 pouce) et une largeur de 0,19 mm (0,0075 pouce).
